# EUROPEAN PATENT APPLICATION

(11) **EP 2 525 314 A1**
(43) Date of publication of application: **21.11.2012**
(21) Application number: 12168447.6
(22) Date of filing: 17.05.2012
(51) Int. Cl.: G06Q 10/06, G06Q 10/04

(54) **Systems and methods for intelligent decision support**

(30) Priority: 19.05.2011 US 201113111449
(71) Applicant: General Electric Company, Schenectady, NY 12345 (US)
(72) Inventor: Chutkay, Sumathi, 500081 Andhra Pradesh (IN); Katta, Bhimesh Kumar, 500081 Andhra Pradesh (IN); Sadhu, Vamshi Krishna, 500081 Andhra Pradesh (IN); Sathyanaryanan, Prasanna, 500081 Andhra Pradesh (IN)
(74) Representative: Cleary, Fidelma

(57) **Abstract**

A geospatial information system (100) includes at least one client computer (104), a memory area (108) configured to store at least one property of an object, and a server system (102) communicatively coupled to the at least one client computer and the memory area. The server system is configured to receive from the at least one client computer a first desired value of the at least one property, transmit to the at least one client computer for display to a user, a comparison between the first desired value and at least one previously stored value of the at least one property, store in the memory area the first desired value and a reason for a difference between the first desired value and the at least one previously stored value, detect a subsequent user input of a second desired value of the at least one property, wherein the second desired value is different than the first desired value, and transmit to the at least one client computer for display to the user, the first desired value and the reason.

## Description

### BACKGROUND OF THE INVENTION

The embodiments described herein relate generally to decision support systems and, more particularly, to systems and methods for providing decision support within a geospatial information system.

At least some known business decision support systems are based on stored rules that are determined in advance. The rules are then compared to input data to determine whether actions and/or object property values that are in accordance with the rules. However, users of at least some known business decision support systems may sometimes choose to perform an action or use an object property value that is outside of the defined boundaries of the predefined rules. The users may choose to perform such actions or use such object property values based on cognitive reasoning, expert analysis, and/or other external factors that are not defined within the rules. Moreover, such decisions are generally not defined within the system for reference by later users and/or cannot be re-examined upon failure in a system that was designed based on such decisions.

### BRIEF DESCRIPTION OF THE INVENTION

In a first aspect, the invention resides in a method including receiving a first desired value of a property of an object in a geospatial information system, displaying to a user a comparison between the first desired value and at least one previously stored value of the property, and storing in a memory area the first desired value and a reason for a difference between the first desired value and the previously stored value. The method also includes detecting a subsequent user input of a second desired value of the property, wherein the second desired value is different than the first desired value, and displaying to the user the first desired value and the reason.

The invention further resides in a computer program comprising computer program code means adapted to perform the above method when executed by a computer and in the computer program embodied on a computer readable medium.

In another aspect, the invention resides in a geospatial information system including at least one client computer, a memory area configured to store at least one property of an object, and a server system communicatively coupled to the client computer and the memory area, the server system including the above computer program.

In yet another aspect, the invention resides in a computer for use with a geospatial information system. The computer includes a memory area configured to store at least one property of an object, and a processor communicatively coupled to the memory area, the processor including the above computer program.

### BRIEF DESCRIPTION OF THE DRAWINGS

Embodiments of the present invention will now be described, by way of example only, with reference to the accompanying drawings in which:
Fig. 1 is a simplified block diagram of an exemplary geospatial information system;
Fig. 2 is an expanded block diagram of an exemplary embodiment of a system architecture that may be used with the geospatial information system shown in Fig. 1; and
Fig. 3 is a flowchart that illustrates an exemplary method that may be used with the geospatial information system shown in Fig. 1.

### DETAILED DESCRIPTION OF THE INVENTION

Exemplary embodiments of systems, methods, and apparatus for use in for generating and using an intelligent future-decision tool for use in various stages of utility planning, designing, and maintenance are described hereinabove. The embodiments described herein facilitate capturing reasoning of skilled and/or expert personnel for deviations made from normal business rules that are stored in a database. Capturing these reasons facilitate making better and/or faster subsequent decisions for similar projects. Moreover, the embodiments described herein facilitate generating and using a database to store a combination of rule-based decisions, skill-based decisions, and/or knowledge-based decisions that may be further influenced by geographical information, climate information, terrain information, and/or political information. The embodiments described herein facilitate assisting new personnel and/or less-skilled personnel with making decisions that are more reliable and relevant for customers and/or project stakeholders. Enhancing or optimizing the reliability and relevancy of such decisions creates consistency in decisions and/or solutions.

Exemplary technical effects of the systems, methods, and apparatus described herein include at least one of: (a) providing rules and/or guidelines for a utility that are defined by business rules that are executed when an object is inserted into a system design, updated within a system design, or deleted from a system design; (b) detecting that user-defined properties of an object are different than expected values; (c) displaying a dialogue prompting the user to confirm or reject the deviation from the expected values and to enter a reason for the deviation; (d) storing the user-defined values, if confirmed by the user, as well as the reason entered by the user; and (e) detecting when subsequently entered user-defined properties of the object are different than expected values, including the previously stored value having the deviation.

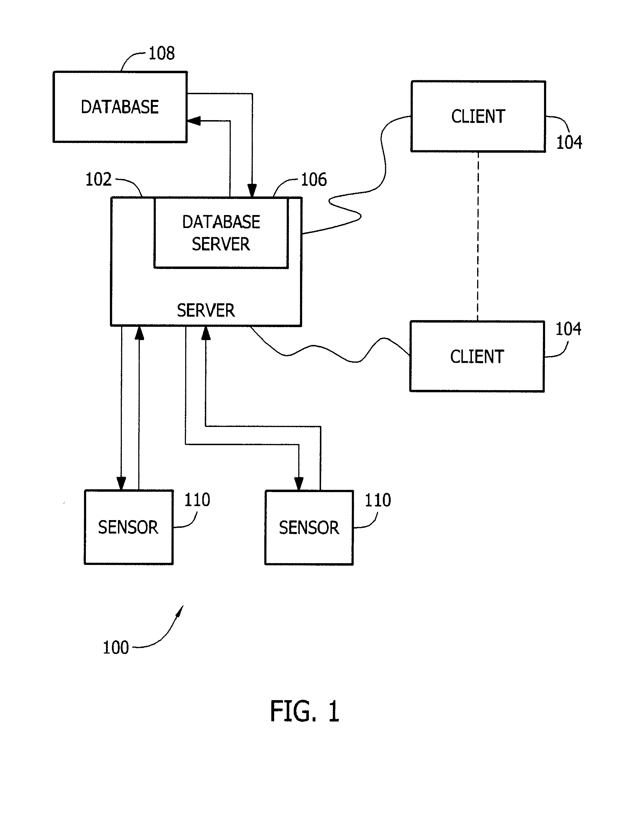

Fig. 1 is a simplified block diagram of an exemplary geospatial information system 100 for use in gathering and processing geospatial data and using the gathered data in business decisions. In the exemplary embodiment, system 100 includes a server system 102, and a plurality of client computers 104 communicatively connected to server system 102. In one embodiment, client computers 104 include a web browser and/or a client software application, such that server system 102 is accessible to client computers 104 over a network, such as the Internet and/or an intranet. Client computers 104 are interconnected to the Internet through many interfaces including a network, such as a local area network (LAN), a wide area network (WAN), dial-in-connections, cable modems, wireless modems, and/or special high-speed Integrated Services Digital Network (ISDN) lines. As described above, client computers 104 may be any device capable of interconnecting to the Internet including a computer, web-based phone, personal digital assistant (PDA), or other web-based connectable equipment. A database server 106 is connected to a memory area 108 containing information on a variety of matters, such as information relating to one or more areas of interest (AOIs). In one embodiment, centralized memory area 108 is stored on server system 102 and is accessed by potential users at one of client computers 104 by logging onto server system 102 through one of client computers 104. In an alternative embodiment, memory area 108 is stored remotely from server system 102 and may be non-centralized.

Memory area 108 may include one, or more than one, forms of memory. For example, memory area 108 can include random access memory (RAM), which can include non-volatile RAM (NVRAM), magnetic RAM (MRAM), ferroelectric RAM (FeRAM) and other forms of memory. Memory area 108 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory area 108. Memory area 108 may also be, or include, a detachable or removable memory, including, but not limited to, a suitable cartridge, disk, CD ROM, DVD or USB memory.

Furthermore, memory area 108 may be organized as a database to store geospatial information and/or business decision rules. As described in more detail below, geospatial information includes, for example, a climate model related to the AOIs, weather conditions related to the AOIs, and/or terrain data related to the AOIs. Moreover, the business decision rules are based on, for example, previously stored values of object properties, previous outcomes associated with the previously stored values, and/or a cost model associated with objects and/or projects. The objects can include, for example, hardware parts for use in completing projects or any other suitable database objects. Furthermore, memory area 108 stores past business decisions made by expert personnel and the reasons for those decisions. In addition, memory area 108 stores failure modes for the objects.

Moreover, in the exemplary embodiment, system 100 includes one or more remote sensors 110. Each sensor 110 gathers information about an object or area of interest. In one embodiment, sensor 110 is not in direct physical contact with the object or area and, as such, is a remote sensor, such as a satellite. For example, sensor 110 may a camera coupled to an earth-orbiting satellite or to an aircraft. Alternatively, sensor 110 may an electromagnetic sensor that collects information about absorbed or reflected electromagnetic radiation. In an alternative embodiment, sensor 110 is in contact with the object or area and may be, for example, a thermometer, hydrometer, or any suitable sensor. In the exemplary embodiment, server system 102 accesses each sensor 110 over a network, such as the Internet and/or an intranet. In some embodiments, sensors 110 are also accessible by client computers 104 over a network, such as the Internet and/or an intranet. Sensors 110 store geospatial information, which may be extracted by server system 102 for storage within memory area 108. Moreover, memory area 108 may include a time stamp for each datum that has been entered or modified within memory area 108. Because memory area 108 may include data extracted from multiple sensors 110, each datum stored within memory area 108 is marked by an identifier such as a key that corresponds to an AOI that relates to the relevant datum.

Server system 102 uses the stored information to assist users in making future decisions based on past decisions, political reasons, human intellectual or factual reasoning, and/or any other suitable decision factors. Moreover, server system 102 is programmed with a feedback mechanism that enables the past decisions and other information to be continually updated for use in making future decisions. For example, memory area 108 and server system 102 can form a learning-based system built on past actions and operations and for use as a future decision-making tool for utility companies, for example, in various stages of planning, designing, building, and/or maintaining utility systems. The feedback mechanism monitors and stores decisions made by users and the reasons for the decisions when the decisions involve object properties that differ from what is expected. The feedback mechanism then provides the previous decisions and the reasons for the deviation when a subsequent deviating decision is detected. For example, server system 102 compares the entered property values that deviate from expected values using one or more rule-based engines to safeguard system 100 from extreme deviations from conventional rule-based decisions and from violating data integrity. Accordingly, server system 102 combines human intellect, past conditions, and failure events over time to form a database of reasons for past deviations. Moreover, server system 102 combines the database with current conditions, such as weather, geographical, and/or political conditions, to enable users to make future decisions.

In the exemplary embodiment, server system 102 can be used to provide rules and/or guidelines for a utility. The rules and/or guidelines can be defined by business rules, which are executed by server system 102 when an object is inserted into a system design, updated within a system design, or deleted from a system design. For example, when a user attempts to insert a pipe into a gas distribution network using client computer 104, server system 102 uses a set of rules to defme expected values for the pipe, such as a certain type of material, expected dimensions, and/or an expected maximum pressure that can be handled by the pipe. If server system 102 detects that the user-defined properties of the pipe are different than the expected values, server system 102 causes client computer 104 to display the expected values and the user-defined values. Moreover, client computer 104 displays a dialogue prompting the user to confirm or reject the deviation from the expected values and to enter a reason for the deviation. Server system 102 stores the user-defined values, if confirmed by the user, as well as the reason entered by the user. Server system 102 may link the user-defmed values and the entered reason to the property such that any subsequent entry by a user for that property that is different from the expected values will be detected by server system 102. Moreover, server system 102 may link the user-defined values and the entered reason to the object, or to a generic object identifier, such that any subsequent entry by a user for that object that is different from the expected values will be detected by server system 102.

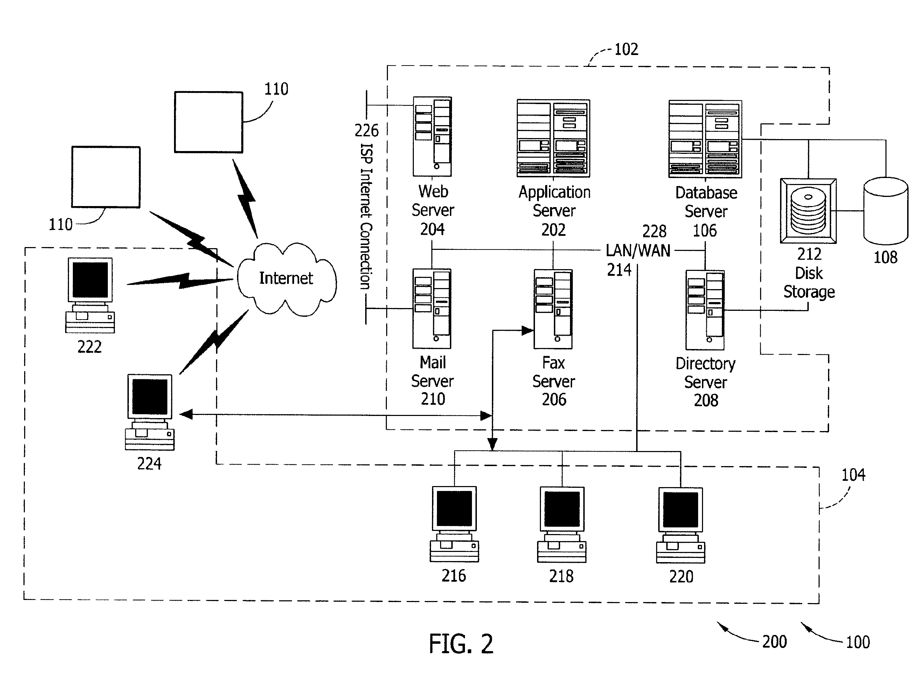

Fig. 2 is an expanded block diagram of an exemplary embodiment of a system architecture 200 of system 100 (shown in Fig. 1). Components in system architecture 200, identical to components of system 100, are identified in Fig. 2 using the same reference numerals as used in Fig. 1. System 200 includes server system 102 and client computers 104. Server system 102 further includes database server 106, an application server 202, a web server 204, a fax server 206, a directory server 208, and a mail server 210. A disk storage unit 212 is coupled to database server 106 and directory server 208. Examples of disk storage unit 212 include, but are not limited to including, a Network Attached Storage (NAS) device and a Storage Area Network (SAN) device. Database server 106 is also coupled to memory area 108. Servers 106, 202, 204, 206, 208, and 210 are coupled in a local area network (LAN) 214. Client computers 104 may include a system administrator workstation 216, a user workstation 218, and a supervisor workstation 220 coupled to LAN 214. Alternatively, client computers 104 may include workstations 216, 218, 220, 222, and 224 that are coupled to LAN 214 using an Internet link or are connected through an intranet.

Each client computer 104, including workstations 216, 218, 220, 222, and 224, may be a personal computer having a web browser and/or a client application. Server system 102 is configured to be communicatively coupled to client computers 104 to enable server system 102 to be accessed using an Internet connection 226 provided by an Internet Service Provider (ISP). The communication in the exemplary embodiment is illustrated as being performed using the Internet, however, any suitable wide area network (WAN) type communication can be utilized in alternative embodiments, that is, the systems and processes are not limited to being practiced using the Internet. In addition, local area network 214 may be used in place of WAN 228. Further, fax server 206 may communicate with remotely located client computers 104 using a telephone link.

Moreover, in the exemplary embodiment, server system 102 is communicatively coupled to one or more remote sensors 110 that acquire data, such as geospatial information. Server system 102 is configured to be communicatively coupled to each sensor 110 to enable server system 102 to access each sensor 110 using Internet connection 226. The communication in the exemplary embodiment is illustrated as being performed using the Internet, however, any suitable wide area network (WAN) type communication can be utilized in alternative embodiments, that is, the systems and processes are not limited to being practiced using the Internet. In addition, local area network 214 may be used in place of WAN 228. Server system 102 is further configured to extract data from each sensor 110 that is specified as a data origin. Server system 102 extracts the data and stores the data within memory area 108.

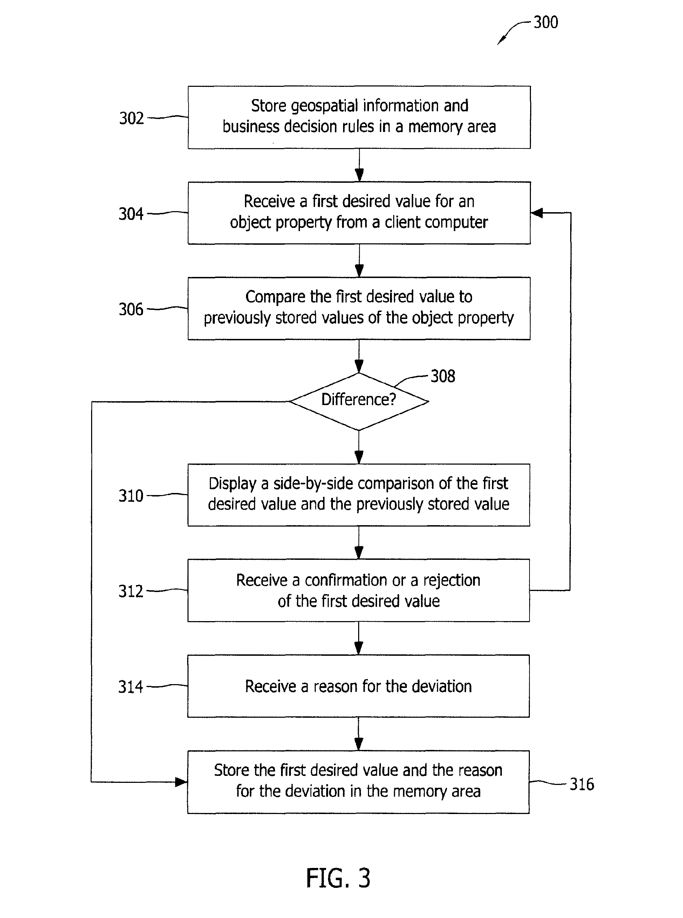

Fig. 3 is a flowchart 300 that illustrates an exemplary method for generating and using an intelligent future-decision tool for use in various stages of utility planning, designing, and maintenance. In the exemplary embodiment, geospatial information and a plurality of business decision rules are stored 302 in memory area 108 (shown in Fig. 1). In the exemplary embodiment, the geospatial information includes one or more climate models related to areas of interest (AOIs), weather conditions related to the AOIs, and/or terrain data related to the AOIs. Moreover, the business decision rules are based on, for example, previously stored values of object properties, previous outcomes associated with the previously stored values, and/or a cost model associated with objects and/or projects. The objects can include, for example, hardware parts for use in completing projects or any other suitable database objects. Furthermore, memory area 108 stores past business decisions made by expert personnel and the reasons for those decisions. In addition, memory area 108 stores failure modes for the objects.

In the exemplary embodiment, a first desired value is received 304 by server system 102 (shown in Fig. 1) from client computer 104 (shown in Fig. 1), wherein the first desired value relates to a property of an object. Server system 102 compares 306 the first desired value to one or more previously stored values for the property, such as expected values for the property, to determine 308 whether a deviation exists. If a deviation exists, server system 102 causes client computer 104 to display 310 a dialogue including a side-by-side comparison between the first desired value and the one or more previously stored values. Moreover, in the exemplary embodiment, server system receives 312 from client computer 104 a user input related to either a confirmation of the first desired value or a rejection of the first desired value after viewing the comparison dialogue. Server system 102 also receives 314 from client computer 104 a user input related to a reason for the deviation between the first desired value and the one or more previously stored values when the deviation is confirmed. In the exemplary embodiment, the user chooses from lists of geospatial information reasons and/or business decision rule reasons when entering the reason for the deviation. If the confirmation is accepted, server system 102 stores 316 the first desired value and the reason in memory area 108 in association with the modified property and/or the modified object. If the confirmation is rejected, the user can re-enter a desired value for the property. In the exemplary embodiment, the reason for the deviation may be retrieved by using, for example, a logic and/or an algorithm. For example, the user may choose the most recent record. The user may further selectively filter and/or organize the record by identifying pre-defined reasons stored in server system 102. The user may also selectively filter and/or organize the record by a relevant field for the record. The user may also selectively filter and/or organize the record by date, such as organizing the record by having the most changed record within a range of date values in a certain tier of a hierarchy that can be retrieved.

In the exemplary embodiment, server system 102 repeats the above-described steps to continually add new scenarios and decisions to memory area 108, thereby using the feedback mechanism to inform later decisions. For example, server system 102 receives 304 a subsequent user input of a second desired value of the same property, wherein the second desired value is different than the first desired value. Server 102 compares 306 the second desired value to one or more previously stored values for the property, such as expected values for the property and including the first desired value, to determine 308 whether a deviation exists. Server system 102 then performs the above-described steps to confirm the second desired value or reject the second desired value after the user views the comparison dialogue. If the user confirms the second desired value, server system 102 stores 316 the second desired value and the reason in memory area 108 in association with the modified property and/or the modified object. If the user rejects the confirmation, the user can re-enter a desired value for the property.

Exemplary embodiments of systems, methods, and apparatus for generating and using an intelligent future-decision tool for use in various stages of utility planning, designing, and maintenance are described above in detail. The systems, methods, and apparatus are not limited to the specific embodiments described herein but, rather, operations of the methods and/or components of the system and/or apparatus may be utilized independently and separately from other operations and/or components described herein. Further, the described operations and/or components may also be defined in, or used in combination with, other systems, methods, and/or apparatus, and are not limited to practice with only the systems, methods, and storage media as described herein.

A computer or server, such as those described herein, includes at least one processor or processing unit and a system memory. The computer or server typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary geographic information system environment, embodiments of the invention are operational with numerous other general purpose or special purpose geographic information system environments or configurations. The geographic information system environment is not intended to suggest any limitation as to the scope of use or functionality of any aspect of the invention. Moreover, the geographic information system environment should not be interpreted as having any dependency or requirement relating to any one or combination of components illustrated in the exemplary operating environment. Examples of well known geographic information systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program components or modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

In some embodiments, the term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term processor.

In some embodiments, the term "database" refers generally to any collection of data including hierarchical databases, relational databases, flat file databases, object-relational databases, object oriented databases, and any other structured collection of records or data that is stored in a computer system. The above examples are exemplary only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method comprising:
receiving, a first desired value of a property of an object in a geospatial information system (100);
displaying to a user, a comparison between the first desired value and at least one previously stored value of the property;
storing in a memory area (108) the first desired value and a reason for a difference between the first desired value and the at least one previously stored value;
detecting, a subsequent user input of a second desired value of the property, wherein the second desired value is different than the first desired value; and
displaying to the user, by the computer (104), the first desired value and the reason.

2. A method in accordance with Claim 1, further comprising storing, in the memory area (108), geospatial information data and a plurality of business decision rules.

3. A method in accordance with Claim 2, further comprising receiving, the reason for the difference between the first desired value and the at least one previously stored value, wherein the reason is related to at least one of the geospatial information data and the plurality of business decision rules.

4. A method in accordance with any of Claims 1 to 3, wherein displaying a comparison between the first desired value and at least one previously stored value comprises determining whether the first desired value is different than the at least one previously stored value associated with the property.

5. A method in accordance with any of Claims 1 to 4, further comprising receiving, a confirmation of the first desired value based on the comparison between the first desired value and at least one previously stored value.

6. A method in accordance with any of Claims 1 to 5, further comprising receiving, a rejection of the first desired value based on the comparison between the first desired value and at least one previously stored value.

7. A computer program comprising computer program code means adapted to perform the method of any of claims 1 to 6 when run on a computer.

8. The computer program of claim 7, embodied on a computer-readable medium.

9. A geospatial information system (100) comprising:
at least one client computer (104);
a memory area (108) configured to store at least one property of an object; and
a server system (102) communicatively coupled to said at least one client computer and said memory area, said server system including the computer program of claim 8.

10. A computer for use with a geospatial information system (100), said computer comprising:
a memory area (108) configured to store at least one property of an object; and
a processor communicatively coupled to said memory area, said processor including the computer program of claim 8.
